# EUROPÄISCHE PATENTANMELDUNG

(11) **EP 2 356 904 A1**
(43) Veröffentlichungstag der Anmeldung: **17.08.2011**
(21) Anmeldenummer: 11401016.8
(22) Anmeldetag: 14.02.2011
(51) Int. Cl.: A01M 7/00

(54) **Landwirtschaftliches Feldspritzensystem**

(30) Priorität: 17.02.2010 DE 102010000436
(71) Anmelder: Amazonen-Werke H. Dreyer GmbH & Co. KG, 49205 Hasbergen (DE)
(72) Erfinder: Austermann, Stefan, 48291, Telgte (DE)

(57) **Zusammenfassung**

Landwirtschaftliches Feldspritzensystem zum dosierten Ausbringen von Flüssigkeiten, insbesondere von Pflanzenbehandlungsmitteln und/oder Düngemitteln, bestehend aus einer Frischwasservorrichtung (1), zumindest einer angetriebenen Pumpe, einer Dosierarmatur und zumindest einem die auszubringenden Flüssigkeiten aufnehmenden Tank, sowie einer Einspeisevorrichtung zum Einspeisen des über die Einspeisevorrichtung in die Trägerflüssigkeit einzuspeisenden Pflanzenbehandlungs- und/oder Düngemittel, so dass die auszubringenden Mittel in die Trägerflüssigkeit eingespült, eingespeist und/oder zugegeben werden können, wobei das System eine Reinigungsvorrichtung (2) zum Reinigen und/oder Ausspülen der Behälter, in denen sich die über die Einspeisevorrichtung zugegebenen Pflanzenbehandlungsmittel und/oder Düngemittel befunden haben. Um hier auf einfache Weise Abhilfe zu schaffen, ist vorgesehen, dass die Reinigungsvorrichtung (2) zumindest eine Reinigungselement (8,9) mit zumindest einer zugeordneten Fixierungsvorrichtung (4) zum Fixieren und Festhalten der Behälter (3) in und/oder auf der Reinigungsvorrichtung zum Reinigungs- und Ausspülvorgang aufweisen.

## Beschreibung

Die Erfindung betrifft ein landwirtschaftliches Feldspritzensystem gemäß des Oberbegriffes des Patentanspruches 1.

Ein derartiges landwirtschaftliches Feldspritzensystem ist beispielsweise durch die DE 39 38 673 C2. bekannt. Bei diesem landwirtschaftlichen Feldspritzensystem ist eine Einspülvorrichtung vorgesehen. Diese Einspritzvorrichtung weist eine Einspüldüse auf, die in eine Reinigungs- und in eine Einspülposition verschwenkt werden kann. In der Einspülposition ist diese Düse nach unten gerichtet. In der Reinigungsposition, um Spritzmittelkanister zu reinigen, ist die Düse nach oben zu schwenken. In dieser Position kann von einer Bedienungsperson der zu reinigende Kanister mit seiner Öffnung über die Reinigungsdüse der Reinigungsvorrichtung gestülpt werden. Während des Reinigungsvorganges muss die Bedienungsperson den Kanister in dieser Position festhalten.

Somit kann immer jeweils nur ein Kanister von einer Person gereinigt werden. Außerdem kann die Bedienungsperson kann während des Reinigungsvorganges keine anderen Arbeiten ausführen.

Der Erfindung liegt die Aufgabe zugrunde, hier auf einfache Weise Abhilfe zu schaffen.

Diese Aufgabe wird erfindungsgemäß dadurch gelöst, dass die Reinigungsvorrichtung zumindest eine Reinigungselement mit zumindest einer zugeordneten Fixierungsvorrichtung zum Fixieren und Festhalten der Behälter in und/oder auf der Reinigungsvorrichtung zum Reinigungs- und Ausspülvorgang aufweisen. Infolge dieser Maßnahmen können die auszuspülenden Behälter in der Fixierungsvorrichtung angeordnet werden. Somit können ohne Anwesenheit einer Bedienungsperson eine oder auch mehrere Behälter, welche die Wirkstoffmittel enthalten haben, in der Reinigungsvorrichtung in einem Reinigungs- oder Ausspülvorgang von der Reinigungsvorrichtung gereinigt werden.

Um in einfacher Weise gleichzeitig mehrere Behälter reinigen zu können, so dass ein reibungsloser Ablauf und eine Zeitersparnis für das Reinigen erreicht wird, ist vorgesehen, dass die Reinigungsvorrichtung mehrere Reinigungselemente mit jeweils zumindest einer zugeordneten Fixierungsvorrichtung zum Fixieren und Festhalten der Behälter in und/oder auf der Reinigungsvorrichtung zum gleichzeitigen Reinigen mehrerer Behälter aufweist.

In einfacher Ausgestaltung kann die Fixierungsvorrichtung als Klemmvorrichtung ausgebildet sein.

Um alle auf dem Markt vorkommenden Behälter in einfacher Weise in der erfindungsgemäßen Reinigungsvorrichtung mit zugeordneter Fixierungsvorrichtung reinigen zu können, ist vorgesehen, dass die Fixierungsvorrichtung für Behälter unterschiedlicher Art und Größe ausgebildet ist.

Weitere Einzelheiten der Erfindung sind der Beispielsbeschreibung und den Zeichnungen zu entnehmen. Hierbei zeigen
- Fig. 1: den auf einem Rahmen angeordneten Flüssigkeitstank mit der Reinigungsstation und dem in dieser zur Reinigung angeordneten Behälter in perspektivischer Darstellung und
- Fig. 2: die Reinigungsstation mit zu reinigenden Behältern in der Ansicht II - II in vergrößerter Darstellung.

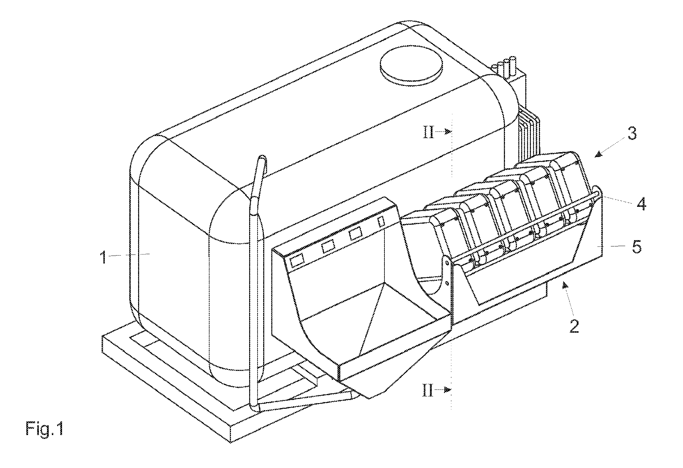

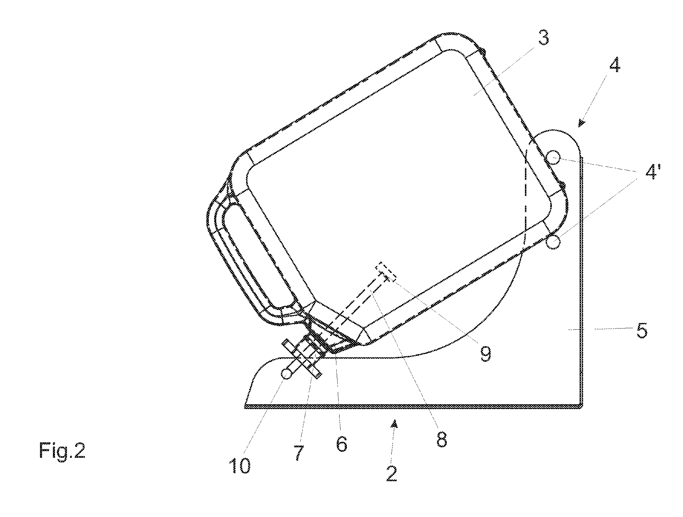

Das landwirtschaftliche Feldspritzensystem ist zum dosierten Ausbringen von Flüssigkeiten, insbesondere von Pflanzenbehandlungen und Düngemitteln vorgesehen. Dieses Feldspritzensystem weist eine Frischwasservorrichtung 1, eine angetriebene Pumpe eine Dosierarmatur und zumindest einem die auszubringende Flüssigkeiten aufnehmenden Tank sowie eine Einspeisevorrichtung zum Einspeisen des über die Einspeisevorrichtung in die Trägerflüssigkeit einzuspeisenden Pflanzenbehandlungs- und Düngemitteln auf, so dass die auszubringende Mittel in die Trägerflüssigkeit eingespült werden können. Über die Einspeisevorrichtung lassen sich die Pflanzenbehandlungsmittel in die Trägerflüssigkeit einspeisen oder zugeben. Dem System ist eine Reinigungsvorrichtung 2 zum Reinigen und Ausspülen der Behälter 3, wie sie Fig. 1 und 2 zeigt, vorgesehen. In diesen Behältern 3 haben sich die über die Einspeisevorrichtung zugegebenen Pflanzenmittel und/oder Düngemittel befunden. Diese Reinigungsstation 2 ist an einer Befüllstation, die einen Frischwasserbehälter 1 aufweist angeordnet. Diese Vorrichtung weist eine nicht dargestellte Einspeisevorrichtung auf, die über nicht dargestellte Verbindungsleitungen mit einer nicht dargestellten Feldspritze, die einen Ausbringtank, sowie Dosierarmaturen und Pumpe aufweisen zugeleitet werden. Die Reinigungseinrichtung 2 weist eine Fixierungseinrichtung 4 zum Fixieren und Festhalten der Behälter 3 in und an der Reinigungsvorrichtung 2 zum Reinigungs- und Ausspülvorgang auf. Hierzu ist eine Halterung 5 vorgesehen, in welche die Behälter 3, wie die Fig. 1 und 2 zeigen kopfüber, d.h. mit der Öffnung 6 des jeweiligen Behälters 3 nach unten, eingesetzt werden können. Hierzu wird die Öffnung 6 mit einem Adapter 7 gekoppelt, der eine Lanze 8 aufweist, an welcher das Reinigungselement 9, beispielsweise Reinigungsdüse, zum Reinigungs- und Ausspülvorgang sich befindet. Der Adapter 7 ist mit einer nicht dargestellten Zuleitung zum zuleiten der Reinigungsflüssigkeit, also des Frischwassers verbunden. Weiterhin weist der Adapter 7 eine Ablaufleitung 10 auf, die in der Einspeisevorrichtung mündet, so dass die bei der Reinigung entstehende Flüssigkeit dem Feldspritzensystem zugeführt werden kann.

Die Reinigungsvorrichtung 2 weist, wie die Fig. 1 zeigt mehrere Reinigungselemente 7, 8, 9 mit jeweils zumindest einer zugeordneten Fixierungsvorrichtung 4 zum Fixieren und Festhalten mehrerer Behälter 3 in der Reinigungsvorrichtung 2 zum gleichzeitigen Reinigen mehrerer Behälter auf 3. Die Fixierungsvorrichtung 4 ist als Klemmvorrichtung ausgebildet. Hierbei können die Behälter 3, wie Fig. 2 zeigt über die beiden Stangen 4' in Verbindung mit dem Adapter 7 in der Reinigungsvorrichtung 2 festgeklemmt werden. Hierbei kann in nicht dargestellter Weise die Fixierungsvorrichtung 4 für Behälter 3 unterschiedlicher Art und Größe ausgebildet sein. Hierzu ist es dann erforderlich, dass die Fixierungsvorrichtung 4 entsprechend ausgestaltet ist.

## Patentansprüche

1. Landwirtschaftliches Feldspritzensystem zum dosierten Ausbringen von Flüssigkeiten, insbesondere von Pflanzenbehandlungsmitteln und/oder Düngemitteln, bestehend aus einer Frischwasservorrichtung, zumindest einer angetriebenen Pumpe, einer Dosierarmatur und zumindest einem die auszubringenden Flüssigkeiten aufnehmenden Tank, sowie einer Einspeisevorrichtung zum Einspeisen des über die Einspeisevorrichtung in die Trägerflüssigkeit einzuspeisenden Pflanzenbehandlungs- und/oder Düngemittel, so dass die auszubringenden Mittel in die Trägerflüssigkeit eingespült, eingespeist und/oder zugegeben werden können, wobei das System eine Reinigungsvorrichtung zum Reinigen und/oder Ausspülen der Behälter, in denen sich die über die Einspeisevorrichtung zugegebenen Pflanzenbehandlungsmittel und/oder Düngemittel befunden haben, **dadurch gekennzeichnet, dass** die Reinigungsvorrichtung (2) zumindest ein Reinigungselement (8, 9) mit zumindest einer zugeordneten Fixierungsvorrichtung (4) zum Fixieren und Festhalten der Behälter (3) in und/oder auf der Reinigungsvorrichtung (2) zum Reinigungs- und Ausspülvorgang aufweisen.

2. Feldspritzensystem nach Anspruch 1, **dadurch gekennzeichnet, dass** die Reinigungsvorrichtung (2) mehrere Reinigungselemente (8, 9) mit jeweils zumindest einer zugeordneten Fixierungsvorrichtung (4) zum Fixieren und Festhalten der Behälter (3) in und/oder auf der Reinigungsvorrichtung (2) zum gleichzeitigen Reinigen mehrerer Behälter (3) aufweist.

3. Feldspritzensystem nach zumindest einem der vorstehenden Ansprüche, **dadurch gekennzeichnet, dass** die
Fixierungsvorrichtung (4) als Klemmvorrichtung ausgebildet ist.

4. Feldspritzensystem nach zumindest einem der vorstehenden Ansprüche, **dadurch gekennzeichnet, dass** die Fixierungsvorrichtung (4) für Behälter (3) unterschiedlicher Art und Größe ausgebildet ist.
